Europäisches Patentamt

European Patent Office

Office européen des brevets

(19)

(11) Veröffentlichungsnummer: **0 048 903**
**A1**

(12) **EUROPÄISCHE PATENTANMELDUNG**

(21) Anmeldenummer: **81107390.7**

(22) Anmeldetag: **18.09.81**

(51) Int. Cl.³: **H 04 L 9/00**

(30) Priorität: **30.09.80 DE 3036804**

(43) Veröffentlichungstag der Anmeldung: **07.04.82**
**Patentblatt 82/14**

(84) Benannte Vertragsstaaten: **AT CH DE FR LI NL SE**

(71) Anmelder: **Licentia Patent-Verwaltungs-GmbH,**
**Theodor-Stern-Kai 1, D-6000 Frankfurt/Main 70 (DE)**

(72) Erfinder: **Bitzer, Wolfgang, Dipl.-Ing.,**
**Rechbergstrasse 15, D-7153 Weissach im Tal (DE)**

(74) Vertreter: **Schickle, Gerhard, Dipl.-Ing. et al, Licentia**
**Patent-Verwaltungs-GmbH Theodor-Stern-Kai 1,**
**D-6000 Frankfurt/Main 70 (DE)**

(54) **Sicherheitssystem zur Verhinderung unerlaubter Manipulationen bei der elektronischen Textübertragung in Nachrichtennetzen.**

(57)    Die Erfindung betrifft ein Sicherheitssystem zur Verhinderung unerlaubter Manipulationen bei der elektronischen verschlüsselten Textübertragung in Nachrichtennetzen mit einer Vielzahl von Teilnehmerstationen und einer Sicherheitszentrale. Dabei soll der einzelne Anwender mit den hierzu erforderlichen Techniken und Prozeduren möglichst wenig belastet werden. Dies wird mit einer automatischen Wähleinrichtung erreicht, die jeweils eine Verbindung zwischen der Sicherheitszentrale und den einzelnen Teilnehmerstationen herstellt, wobei die Sicherheitszentrale mit Hilfe eines Zufalls-Bitumsetzer-Generators jeweils einen Verbindungsschlüssel erwürfelt. Dabei ist dann gewährleistet, dass eine Nachricht wirklich vom angegebenen Absender stammt und nicht verändert wurde, und dass die Nachricht tatsächlich beim Empfänger eingetroffen ist.

P 30 36 804.8

0048903

-1-

Licentia Patent-Verwaltungs-GmbH     Z13 PTL-BK/Mo/be
Theodor-Stern-Kai 1                   BK 80/91
D-6000 Frankfurt 70

### Sicherheitssystem zur Verhinderung unerlaubter Manipulationen bei der elektronischen Textübertragung in Nachrichtennetzen

Bei der Übertragung von Texten über Nachrichtennetze besteht vielfach die Aufgabe nach einer zusätzlichen Sicherheit gegen unbefugte Kenntnisnahme durch Dritte, einer nicht manipulierbaren Absenderangabe (Authentisierung), einem nicht manipulierbaren Beweis, daß ein Schreiben wirklich von dem angegebenen Absender stammt und nachweisbar nicht verändert wurde (elektronischer Unterschrift) sowie einem nachprüfbaren Beweis, daß ein Schreiben bestimmten Inhalts wirklich beim Empfänger eingetroffen ist (elektronisches Einschreiben). Diese Aufgabe läßt sich durch erfindungsgemäße Anwendung kryptographischer Methoden erfüllen. In öffentlichen Netzen besteht aber noch die zusätzliche Forderung, daß der Anwender mit den hierzu erforderlichen Techniken und Prozeduren möglichst wenig belastet werden soll.

Diese Aufgabenstellung wird durch das erfindungsgemäße

P 30 36 804.8

Sicherheitssystem gelöst.

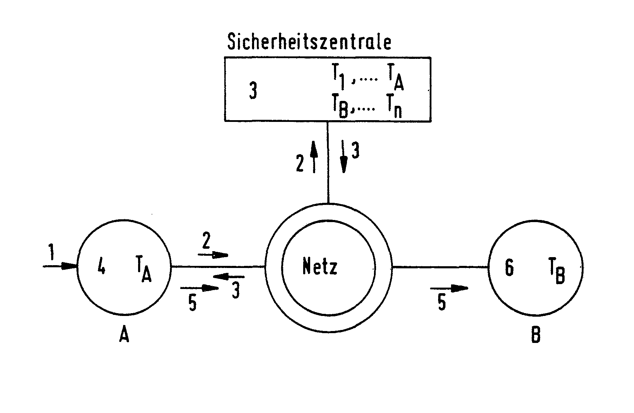

Das Sicherheitssystem wird im Folgenden anhand der Zeichnung näher erläutert. Sie zeigt die schematische Darstellung eines Nachrichtennetzes mit den darin ablaufenden Prozeduren gemäß der Erfindung.

In der folgenden Beschreibung bedeutet die Aussage, daß eine Information mittels eines Schlüssels S ver- bzw. entschlüsselt wird, daß diese Ver- bzw. Entschlüsselung durch ein Schlüsselgerät bzw. einen Schlüsselrechner oder Schlüsselalgorithmus erfolgt, das bzw. der durch den Schlüssel S voreingestellt wird. Die Art der Verschlüsselung wird dabei sowohl durch den Algorithmus, der bekannt sein kann, als auch durch den Schlüssel S, der geheimzuhalten ist, bestimmt. (Siehe z. B. Diffie und Hellmann: Privacy and Autentication an Introduction for Cryptography, Proceedings of the IEEE Vol. 67, No. 3, März 1979, S. 397...427, hier insbesondere Seite 398, rechte Spalte, Mitte oder Charles R. Erickson: Datenschutz durch Datenverschlüsselung, ELEKTRONIK 1979, Heft 19, S. 45...51, Abschnitt 1).

In der Zeichnung stellt der große Kreis in der Mitte schematisch ein Wählnetz dar, an das eine größere Zahl (n) von Teilnehmerstationen angeschlossen ist, von denen nur zwei, nämlich eine erste Teilnehmerstation (A) und eine zweite (B) gezeichnet sind. Außerdem ist an das Netz mindestens eine Sicherheitszentrale (SZ) angeschlossen.

Jede der n Teilnehmerstationen besitzt einen eigenen Teilnehmerschlüssel $T_1$, $T_2$...$T_n$; diejenigen der herausgezeichneten Teilnehmerstationen seien mit $T_A$ bzw. $T_B$ bezeichnet. Die Teilnehmerschlüssel sind außerdem noch in einem Schlüsselspeicher (SSP) in der Sicherheitszentrale abgespeichert.

Angenommen, eine erste Teilnehmerstation (A) möchte mit einer zweiten (B) gesichert Informationen austauschen, so
laufen erfindungsgemäß nacheinander die in Anspruch 1 dargestellten Prozeduren ab. Die Ziffern in der Zeichnung entsprechen der Bezifferung in der folgenen Beschreibung:

1. Die in einer ersten Teilnehmerstation (A) gewählte Rufnummer einer zweiten Teilnehmerstation (B) wird nicht an
   das Netz weitergegeben, sondern zunächst abgespeichert.

2. Stattdessen baut die erste Teilnehmerstation, z. B. mittels einer automatischen Wähleinrichtung und einer fest
   abgespeicherten Rufnummer, eine Verbindung zur Sicherheitszentrale auf, über die von der ersten Teilnehmerstation (A) zur Sicherheitszentrale die eigene Rufnummer
   bzw. Kennung (a) und die in Schritt 1 eingegebene Rufnummer bzw. Kennung (b) der zweiten Teilnehmerstation
   (B) übertragen werden.

3. Die Sicherheitszentrale erwürfelt nun mittels eines Zufalls-Bitmuster-Generators eine als "Verbindungsschlüssel" bezeichnete Bitfolge und überträgt über die noch bestehende Verbindung zum ersten Teilnehmer (A) nacheinander:

   mit dem Teilnehmerschlüssel der ersten Station (A) verschlüsselt:

   die Kennung (b) der zweiten Teilnehmerstation (B) und den
   Verbindungsschlüssel sowie mit dem Teilnehmerschlüssel
   (b) der zweiten Station (B) verschlüsselt:

   die Kennung (a) der ersten Teilnehmerstation (A) und denselben Verbindungsschlüssel, so daß das übertragene Signal damit die Struktur $(b, V)_{TA}$, $(a, V)_{TB}$ besitzt.

4. In der ersten Teilnehmerstation (A) wird der mit ihrem Teilnehmerschlüssel ($T_A$) verschlüsselt von der Sicherheitszentrale übertragene Teil der Information entschlüsselt und abgespeichert, der andere Teil wird unverändert abgespeichert. Die Verbindung zur Sicherheitszentrale wird aufgelöst.

5. Die erste Teilnehmerstation (A) baut nun mittels der automatischen Wähleinrichtung und der noch von Schritt 1 her abgespeicherten Rufnummer eine Verbindung zur zweiten Teilnehmerstation (B) auf und überträgt dieser den mit ihrem Teilnehmerschlüssel ($T_B$) verschlüsselt abgespeicherten zweiten Teil der von der Sicherheitszentrale empfangenen Information.

6. Die in Schritt 5 übertragene Information wird in der zweiten Teilnehmerstation (B) mit deren Teilnehmerschlüssel ($T_B$) entschlüsselt und abgespeichert.

Beide Teilnehmerstationen (A, B) besitzen jetzt denselben Verbindungsschlüssel V, mit dem sie anschließend direkt zwischen ihren verschlüsselt zu übertragenden Informationen ver- bzw. entschlüsseln können.

Die erste Teilnehmerstation (A) erhält mit der ihr verschlüsselt übertragenen Kennung (b) der zweiten Station (B) die Bestätigung, daß denselben Verbindungsschlüssel, den sie bekommen hat, sonst nur noch die angewählte Station (B) erhält und somit nur diese die damit verschlüsselten Informationen entschlüsseln kann. Die angewählte Station (B) erhält mit der mit ihrem Teilnehmerschlüssel ($T_B$) verschlüsselt ihr übertragenen Kennung (a) der ersten Station die Gewähr, daß die mit dem mit übertragenen Teilnehmerschlüssel verschlüsselt eintreffenden Informationen nur von dem ersten Teilnehmer (A) stammen können, denn niemand außer der Sicherheitszentrale (und dem zweiten Teilnehmer selbst) kann ja die Kennung (a) des ersten Teilnehmers mit dem Teilnehmerschlüssel ($T_B$) des zweiten Teilnehmers verschlüsseln.

In einer weiteren Ausgestaltung der Erfindung wird nach Herstellung der direkten Verbindung zwischen den beiden Teilnehmerstationen die Kennung der einen Teilnehmerstation unverschlüsselt oder mit dem Verbindungsschlüssel verschlüsselt zu der anderen Teilnehmerstation übertragen, ggf. entschlüsselt und automatisch mit der von der Sicherheitszentrale übertragenen Kennung verglichen, nachdem diese mittels des Teilnehmerschlüssels entschlüsselt wurde.

Mit dem bisher dargestellten System ist es möglich, übertragene Information vor unbefugter Kenntnisnahme durch Dritte zu schützen. Des weiteren ist es damit möglich, daß sich der Absender Gewißheit darüber verschafft, daß seine Information nur an den gewünschten Adressaten gelangen kann und der Empfänger, daß die angekommene Information nur von dem angegebenen Absender stammt. Der Empfänger kann damit aber noch nicht Dritten gegenüber beweisen, daß er zu einer bestimmten Zeit tatsächlich Informationen von dem angegebenen Absender bekommen hat, denn er könnte diese ja selbst erzeugt bzw. manipuliert haben. Deshalb wird in einer weiteren Ausgestaltung der Erfindung vorgeschlagen (Anspruch 4), alle Verbindungsaufnahmen von Teilnehmerstationen zur Sicherheitszentrale samt Datum, Uhrzeit, Kennungen der rufenden und der gerufenen Station in der Sicherheitszentrale zu protokollieren. In einem Streitfall kann dann nachgeprüft werden, daß der Absender tatsächlich zur fraglichen Zeit eine verschlüsselte Verbindung zu dem Empfänger in die Wege geleitet hat.

In einer weiteren Ausgestaltung der Erfindung (Anspruch 5) kann vom Empfänger bewiesen werden, daß der übertragene Verbindungsschlüssel tatsächlich zur verschlüsselten Übertragung der Nachricht verwendet wurde, indem eine aus dem Verbindungsschlüssel berechnete Bitfolge (Signatur), die abhängig ist von diesem Verbindungsschlüssel, aus der sich dieser aber nicht zurückrechnen läßt, sowohl beim Empfänger der Nachricht als auch in der Sicherheitszentrale berechnet und protokolliert wird.

In einem späteren Streitfall kann dann nachgeprüft werden, ob die beim Empfänger protokollierte Bitfolge mit der in der Sicherheitszentrale protokollierten übereinstimmt. Prinzipiell könnte man zu diesem Zweck auch den Verbindungsschlüssel direkt protokollieren. Dies ist aber nicht so zweckmäßig, da damit unter Umständen für unbefugte Dritte noch die Möglichkeit bestehen könnte, evtl. bei der Übertragung aufgezeichnete, verschlüsselte Informationen später doch noch zu entschlüsseln.

Damit kann ein Empfänger jetzt beweisen, daß er zu einer bestimmten Zeit Informationen von einem bestimmten Absender bekommen hat. Er kann diese aber immer noch verändern oder sogar durch ganz andere ersetzen, ohne daß dies später nachgeprüft werden kann.

Er kann also noch nicht beweisen, daß er genau die vorgelegte Information (Urkunde) von dem angegebenen Absender erhalten hat. Gemäß einer weiteren Ausgestaltung der Erfindung (Anspruch 6, 7) ist aber auch das möglich.

Zu diesem Zweck berechnet die Teilnehmerstation des Absenders, bevor sie die Verbindung zur Sicherheitszentrale aufbaut, aus der zuvor eingegebenen, abgespeicherten und später zum Empfänger zu übertragenden Information eine sogenannte "Signatur". Dies ist eine Zeichenfolge, die von der Information abhängig ist, aus der die Information selbst aber nicht wieder zurückgerechnet werden kann. Sie ist im allgemeinen sehr viel kürzer als die Information aus der sie abgeleitet wurde. Sie kann beispielsweise dadurch be-

0048903

P 30 36 804.8

- 13 -

rechnet werden, daß die Information durch ein rückgekoppeltes Schieberegister geschickt wird und der danach verbleibende Inhalt des Schieberegisters als Signatur dient. Es sind aber auch noch viele weitere Möglichkeiten denkbar, diese Signatur zu berechnen (Zählen der Zeichen, Berechnen von Quersummen, Zählen der "1"-Bits, Aufteilen in Blöcke und Addieren deren Zahlenwerte, evtl. modulo einer Zahl usw.), es müssen nur o.g. Forderungen erfüllt sein, außerdem darf es nicht möglich sein, Änderungen der Information durch systematisches Ändern oder Ergänzen an anderer Stelle so zu kompensieren, daß sich wieder dieselbe Signatur ergibt.

Die so berechnete Signatur wird nun mit dem eigenen Teilnehmerschlüssel verschlüsselt und nach dem Aufbau der Verbindung zur Sicherheitszentrale dorthin übertragen. Hier wird sie entschlüsselt und zusammen mit den anderen Daten protokolliert. Außerdem wird sie aber mit dem Teilnehmerschlüssel ($T_B$) des Empfängers der Information erneut verschlüsselt und in der bereits beschriebenen Prozedur zusammen mit den übrigen Kennungen, verschlüsseltem Spruchschlüssel usw., zurückübertragen.

Die mit dem Teilnehmerschlüssel ($T_B$) des Empfängers verschlüsselte Signatur wird später zusammen mit der verschlüsselten Information diesem übertragen. Der Empfänger kann nun einerseits die übertragene Signatur mit seinem Teilnehmerschlüssel ($T_B$) entschlüsseln und daraus selbst die Signatur berechnen. Durch Vergleich der beiden so erhaltenen Signaturen auf Identität kann sich der Empfänger von der Integrität der erhaltenen Information überzeugen.

Bei später auftretenden Streitfällen kann auf die in der Sicherheitszentrale protokollierte Signatur zurückgegriffen werden und so die Echtheit der Information bewiesen werden.

Wenn nun der Empfänger (B) auf die gleiche Weise, d.h. unter Einschaltung der Sicherheitszentrale eine Quittung zu dem Absender zurücküberträgt, die die Signatur der zuvor in der Gegenrichtung übertragenen Information mit enthält, so erhält auch der Absender eine eindeutige Beweismöglichkeit, daß er diese Information dem Empfänger wirklich übersandt hat (Anspruch 8).

Das System ist nicht auf die gesicherte Übertragung zwischen zwei Teilnehmerstationen beschränkt, sondern läßt sich ohne weiteres für Verbindungen zwischen mehreren Teilnehmern erweitern. Die initialisierende Teilnehmerstation überträgt in diesem Falle nach dem Verbindungsaufbau zur Sicherheitszentrale anstelle der Kennung für nur eine zweite Teilnehmerstation nacheinander die Kennungen sämtlicher Teilnehmerstationen, mit denen sie Verbindung aufnehmen will. Die Sicherheitszentrale verschlüsselt daraufhin den erwürfelten Verbindungsschlüssel mit den Teilnehmerschlüsseln aller dieser Teilnehmerstationen und überträgt sie dem ersten Teilnehmer. Sinngemäß lassen sich auch die anderen beschriebenen Prozeduren auf mehrere Teilnehmerstationen erweitern (Anspruch 9).

Es ist auch nicht unbedingt erforderlich, daß die für die gerufene(n) Teilnehmerstation(en) bestimmten Daten von der Sicherheitszentrale zunächst zur rufenden Teilnehmerstation übertragen werden, sondern sie können auch von der Sicherheitszentrale direkt zu den gerufenen Teilnehmerstationen übertragen werden (Anspruch 10). Das Verfahren, die Daten zunächst zur rufenden Teilnehmerstation zu übertragen, ist allerdings insofern vorteilhaft, als es die Anzahl der erforderlichen Verbindungsaufbauten minimiert.

Schließlich besteht eine Variante zu dem in Anspruch 1 beschriebenen Ablauf darin, daß der Verbindungsschlüssel und die entsprechenden Kennungen für die rufende Station (A) zunächst unverschlüsselt bleiben, dann aber die gesamten

P 30 36 804.8

Daten vor der Übertragung von der Sicherheitszentrale zur rufenden Teilnehmerstation (A) mit deren Teilnehmerschlüssel ($T_A$) überschlüsselt werden. In der Teilnehmerstation (A) wird dann alles mit deren Teilnehmerschlüssel ($T_A$) entschlüsselt, wobei direkt der Verbindungsschlüssel nebst zugeordneter Kennung in klar und die mit dem/den Teilnehmerschlüssel(n) der gewünschten Teilnehmerstation verschlüsselte Verbindungsschlüssel und Kennungen entstehen. Der weitere Ablauf der Prozeduren ist dann wie beschrieben.

- - - - - - - - -

P 30 36 804.8

0048903

- 1 -

Licentia Patent-Verwaltungs-GmbH  Z13 PTL-BK/Mo/be
Theodor-Stern-Kai 1                BK 80/91
D-6000 Frankfurt 70

Patentansprüche

1. Sicherheitssystem zur Verhinderung unerlaubter Manipulationen bei der elektronischen Textübertragung in Nachrichtennetzen mit einer Vielzahl von Teilnehmerstationen, die mit je einem speziellen Teilnehmerschlüssel versehen sind und mindestens einer Sicherheitszentrale, in der alle diese Teilnehmerschlüssel ebenfalls abgespeichert sind, wobei diese Teilnehmerschlüssel nur zum Ver- und Entschlüsseln der zwischen den Teilnehmern und der Zentrale ausgetauschten Informationen dienen, welche insbesondere aus Schlüsseln und Kennungen bestehen, <u>gekennzeichnet</u> durch die aufeinanderfolgende Anwendung folgender Verfahrensschritte:

   1. Die in einer ersten Teilnehmerstation (A) gewählte Rufnummer einer zweiten Teilnehmerstation (B) wird nicht an das Netz weitergegeben, sondern zunächst abgespeichert.

   2. Stattdessen baut die erste Teilnehmerstation, z.B. mittels einer automatischen Wähleinrichtung und einer fest abgespeicherten Rufnummer, eine Verbindung zur Sicherheitszentrale auf, über die von der ersten Teilnehmerstation (A) zur Sicherheitszentrale die eigene Rufnummer bzw. Kennung (a) und die in Schritt 1 eingegebene Rufnummer bzw. Kennung (b) der zweiten Teilnehmerstation (B) übertragen werden.

3. Die Sicherheitszentrale erwürfelt nun mittels eines Zufalls-Bitmuster-Generators eine als "Verbindungsschlüssel" bezeichnete Bitfolge und überträgt über die noch bestehende Verbindung zum ersten Teilnehmer (A) nacheinander:

mit dem Teilnehmerschlüssel der ersten Station (A) verschlüsselt:

die Kennung (b) der zweiten Teilnehmerstation (B) und den Verbindungsschlüssel, sowie mit dem Teilnehmerschlüssel (b) der zweiten Station (B) verschlüsselt:

die Kennung (a) der ersten Teilnehmerstation (A) und denselben Verbindungsschlüssel, so daß das übertragene Signal damit die Struktur $(b, V)_{TA}$, $(a, V)_{TB}$ besitzt.

4. In der ersten Teilnehmerstation (A) wird der mit ihrem Teilnehmerschlüssel $(T_A)$ verschlüsselt von der Sicherheitszentrale übertragene Teil der Information entschlüsselt und abgespeichert, der andere Teil wird unverändert abgespeichert. Die Verbindung zur Sicherheitszentrale wird aufgelöst.

5. Die erste Teilnehmerstation (A) baut nun mittels der automatischen Wähleinrichtung und der noch von Schritt 1 her abgespeicherten Rufnummer eine Verbin-

0048903

dung zur zweiten Teilnehmerstation (B) auf und überträgt dieser den mit ihrem Teilnehmerschlüssel ($T_B$) verschlüsselt abgespeicherten zweiten Teil der von der Sicherheitszentrale empfangenen Information.

6. Die in Schritt 5 übertragene Information wird in der zweiten Teilnehmerstation (B) mit deren Teilnehmerschlüssel ($T_B$) entschlüsselt und abgespeichert.

2. Sicherheitssystem nach Anspruch 1, dadurch gekennzeichnet, daß der in den beiden Teilnehmerstationen (A, B) entschlüsselt abgespeicherte Verbindungsschlüssel dazu verwendet wird, Information zwischen den beiden Teilnehmerstationen direkt und verschlüsselt auszutauschen.

3. Sicherheitssystem nach Anspruch 1 oder 2, dadurch gekennzeichnet, daß die in den beiden Teilnehmerstationen (A, B) jeweils abgespeicherte Kennung (b, a) der jeweils anderen Teilnehmerstation mit der über die direkte Verbindung zusammen mit den übrigen Informationen von der anderen Teilnehmerstation klar oder verschlüsselt übertragenen Kennung verglichen und so ihre Echtheit überprüft wird.

4. Sicherheitssystem nach einem der Ansprüche 1 bis 3, dadurch gekennzeichnet, daß die Verbindungsaufnahmen von Teilnehmerstationen und der erfolgte Datenaustausch in der Sicherheitszentrale in einem Journal zusammen mit Datum und Uhrzeit protokolliert werden.

5. Sicherheitssystem nach Anspruch 4, dadurch gekennzeichnet, daß der jeweils erwürfelte Verbindungsschlüssel selbst nicht protokolliert wird, aber eine daraus abgeleitete Zeichenfolge, aus der aber der Verbindungsschlüssel selbst nicht mehr berechnet werden kann und daß auch die beteiligten Teilnehmerstationen oder wenigstens die angewählte zweite Teilnehmerstation (B) diese Zeichenfolge aus dem Verbindungsschlüssel berechnen und protokollieren und daß bei später auftretenden Streitfällen die von den Teilnehmerstationen protokollierten, abgeleiteten Zeichenfolgen mit derjenigen in der Sicherheitszentrale verglichen werden können.

6. Sicherheitssystem nach Anspruch 4 oder 5, dadurch gekennzeichnet, daß in der ersten Teilnehmerstation (A) schon vor der Verbindungsaufnahme zur Sicherheitszentrale aus dem zuvor abgespeicherten und zu übertragenden Text eine Zeichenfolge berechnet wird, aus der sich der Text nicht zurückrechnen läßt, daß diese Zeichenfolge dann, zusammen mit den anderen Informationen, mit dem Teilnehmerschlüsse ($T_A$) der ersten Teilnehmerstation (A) verschlüsselt zur Sicherheitszentrale übertragen, dort entschlüsselt und ebenfalls protokolliert wird.

7. Sicherheitssystem nach Anspruch 6, dadurch gekennzeichnet, daß die zur Sicherheitszentrale verschlüsselt übertragene und dort entschlüsselte Zeichenfolge mit dem Teilnehmerschlüssel ($T_B$) der zweiten Teilnehmerstation (B) erneut verschlüsselt zu dem ersten Teilnehmer (A) und später von dort zu dem zweiten Teilnehmer (B) übertragen und dort mittels dessen Teilnehmerschlüssel ($T_B$) entschlüsselt und protokolliert wird.

8. Sicherheitssystem nach Anspruch 7, dadurch gekennzeichnet, daß die Rollen der beiden Teilnehmerstationen vertauscht sind und der "zuvor abgespeicherte Text" aus einer Quittung für den zuvor in der Gegenrichtung übertragenen Text besteht und daß diese Quittung auch die aus dem zuvor in der Gegenrichtung übertragenen Text berechnete Zeichenfolge enthält.

9. Sicherheitssystem nach einem oder mehreren der vorange-

gangenen Ansprüche, <u>dadurch gekennzeichnet</u>, daß in die erste Teilnehmerstation (A) nicht nur die Rufnummer einer zweiten Teilnehmerstation (B) eingegeben wird, sondern gleich mehrere Rufnummern (bzw. Kennungen) für mehrere Teilnehmerstationen, daß diese nach dem Verbindungsaufbau alle zur Sicherheitszentrale übertragen werden, daß diese die Kennung der ersten Teilnehmerstation (A) und den entwürfelten Verbindungsschlüssel nacheinander mit den Teilnehmerschlüsseln dieser mehreren Teilnehmerstationen verschlüsselt und sie sowie die mit dem Teilnehmerschlüssel der ersten Teilnehmerstation (A) verschlüsselten Kennungen der weiteren Teilnehmerstationen zur ersten Teilnehmerstation (A) überträgt und daß der weitere Ablauf der Prozeduren mit den weiteren Teilnehmerstationen gleichzeitig oder nacheinander genauso abläuft, wie in den vorangegangenen Ansprüchen beschrieben.

10. Sicherheitssystem nach einem oder mehreren der vorangegangenen Ansprüche, <u>dadurch gekennzeichnet</u>, daß die mit den Teilnehmerschlüsseln der zweiten bzw. der weiteren Teilnehmerstationen verschlüsselten Kennungen, Verbindungsschlüssel und Zeichenfolgen nicht von der Sicherheitszentrale zunächst an die erste Teilnehmerstation (A), sondern direkt an die zweite bzw. an die weiteren Teilnehmerstationen übertragen werden.

11. Sicherheitssystem nach einem oder mehreren der Ansprüche 1 bis 9, <u>dadurch gekennzeichnet</u>, daß in der Sicherheitszentrale zunächst nur die für die zweite Teilnehmerstation (B) bzw. die weiteren Teilnehmerstationen bestimmten Kennungen, Teilnehmerschlüssel und Zeichenfolgen mit jeweils deren Teilnehmerschlüssel verschlüsselt werden und diese Informationen dann zusammen mit den für diese bestimmten Kennungen, Teilnehmerschlüsseln und Zeichenfolgen vor der Übertragung zur ersten Teilnehmerstation (A) mit deren Teilnehmerschlüssel $(T_A)$ verschlüsselt werden, also die übertragene Signal-

folge die Struktur

$$[b, V, (a, V)_{TB}]_{TA} \quad bzw.$$

$$[b, c, d..., V, (a, V)_{TB}, (a, V)_{TC}, (a, V)_{TD}, ...]_{TA}$$

besitzt. In der ersten Teilnehmerstation (A) wird die gesamte von der Sicherheitszentrale übertragene Information mit dem Teilnehmerschlüssel ($T_A$) entschlüsselt und abgespeichert. Der weitere Ablauf ist dann wie in den vorangegangenen Ansprüchen beschrieben.

12. Sicherheitssystem nach einem oder mehreren der vorhergehenden Ansprüche, gekennzeichnet durch seine Anwendung bei der Textübertragung bzw. im TELETEX-Dienst.

Europäisches
Patentamt

**EUROPÄISCHER RECHERCHENBERICHT**

0048903

Nummer der Anmeldung

EP 81 10 7390

| Kategorie | Kennzeichnung des Dokuments mit Angabe, soweit erforderlich, der maßgeblichen Teile | betrifft Anspruch |
|---|---|---|
| | COMMUNICATIONS OF THE ACM, Band 21, Nr. 12, Dezember 1978, NEW YORK (US) R.M. NEEDHAM et al.: "Using Encryption for Authentication in Large Networks of Computers", Seiten 993-999 \* Seite 994, rechte Spalte, Zeile 30 bis Seite 995, rechte Spalte, erste Zeile; Seite 998, linke Spalte, Zeilen 13-47 \* --- | 1,2,7 |
| | 1978 NATIONAL COMPUTER CONFERENCE, AFIPS CONFERENCE PROCEEDINGS, 5.-8. Juni 1978 MONTVALE (US) M.E. HELLMAN: "Security in communication networks", Seiten 1131-1134 \* Seite 1133, rechte Spalte, Zeilen 27-49 \* | 6 |

**EINSCHLÄGIGE DOKUMENTE**

**KLASSIFIKATION DER ANMELDUNG (Int. Cl.·)**

H 04 L 9/00

**RECHERCHIERTE SACHGEBIETE (Int. Cl.³)**

H 04 L 9/00
9/02
G 09 C 1/10
1/06

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07.01.1982 | HOLPER |

EPA form 1503.1 06.78